# EUROPEAN PATENT APPLICATION

(11) **EP 4 617 977 A1**
(43) Date of publication of application: **17.09.2025**
(21) Application number: 24163870.9
(22) Date of filing: 15.03.2024
(51) Int. Cl.: G06Q 10/20, G06F 3/01, G06N 3/006, G06N 20/00, G06Q 50/04, G06T 19/00, G09B 19/00, G09B 19/24

(54) **SYSTEMS AND METHODS TO INTELLIGENTLY EQUIP AND PERSONALIZE TOOLS FOR AN AVATAR IN INDUSTRIAL METAVERSE**

(71) Applicant: Siemens Aktiengesellschaft, 80333 München (DE)
(72) Inventor: MANICKAM, Ramesh, 560100 Bangalore, Karnataka (IN)
(74) Representative: HKW Intellectual Property PartG mbB

(57) **Abstract**

Disclosed is a computer-implemented method (400) to intelligently equip and personalize tools for a plurality of avatars in an industrial metaverse. The method (400) includes identifying (404) for each avatar of a plurality of avatars, a scenario in which a corresponding avatar has entered into the industrial metaverse. The plurality of avatars corresponds to a plurality of users in the industrial metaverse. Further, the method (400) includes performing (406) cognitive profiling of each user of the plurality of users based on user profile information associated with each user. Furthermore, the method (400) includes equipping (408) each avatar of the plurality of avatars with a recommended set of tools from a set of tools based on the identified scenario for the corresponding avatar, the cognitive profiling of a corresponding user associated with the corresponding avatar, and an objective associated with the corresponding avatar.

## Description

The present invention generally relates to Multiuser Virtual Environment (MUVE) systems, and more particularly relates to a system and a method to intelligently equip and personalize tools for an avatar in an industrial metaverse.

The industrial metaverse is a multiuser virtual environment in which users enter into a virtual world as an avatar. The avatars serve as digital representations of users within the virtual environment. Each user enters in the virtual environment to solve problems in the virtual environment. In industrial scenarios, such as the B2B context, the avatars play a critical role in addressing real-life challenges.

Further, the avatars enable the users to perform tasks more efficiently and effectively than the users themselves by equipping the avatars with a personalized set of tools. By doing so, the avatars gain the ability to navigate the digital landscape with precision, whether it's assembling components, managing factory operations, or designing intricate structures.

However, equipping the avatars with a personalized set of tools has several challenges. For example, in the virtual environment of a factory floor where multiple avatars coexist, each avatar represents a distinct role (e.g., maintenance personnel, assembly technicians, factory managers, design engineers). These avatars with distinct roles require specialized toolsets unique to their responsibilities. However, the uniformity of tools across avatars poses limitations.

The currently available solutions equip the avatars with tools that cater to their specific needs to search for relevant tools manually or automatically within the virtual environment when the need arises. For this, the user spends valuable time getting information of the right tools from the past to do his work efficiently rather than focusing on the immediate task. Thus, the users enter into problem-solving mode upon entry into the virtual world, only to search for necessary tools and information during the problem-solving process. This disrupts workflow and efficiency.

In light of the above, there exists a need for intelligently equipping the avatars with personalized tools in a faster and more efficient manner by understanding particular scenarios in the industrial metaverse.

Therefore, it is an object of the present invention to provide a system and a method for intelligently equipping the avatars with personalized tools.

The object of the present invention is achieved by a computer-implemented method to intelligently equip and personalize tools for a plurality of avatars in an industrial metaverse. The method includes identifying, by one or more processors, for each avatar of a plurality of avatars, a scenario in which a corresponding avatar has entered into the industrial metaverse. The scenario is identified based on one or more information associated with the corresponding avatar. The plurality of avatars corresponds to a plurality of users in the industrial metaverse. Further, the method includes performing, by the one or more processors, cognitive profiling of each user of the plurality of users based on user profile information associated with each user. Furthermore, the method includes equipping, by the one or more processors, each avatar of the plurality of avatars with a recommended set of tools from a set of tools based on the identified scenario for the corresponding avatar, the cognitive profiling of a corresponding user associated with the corresponding avatar, and a mapping of an objective associated with the corresponding avatar with the set of tools.

In an embodiment, the method further includes generating, by the one or more processors, the plurality of avatars based on the plurality of users entering into the industrial metaverse. Further, the method includes identifying, by the one or more processors, an objective required to be performed by each avatar of the plurality of avatars. Furthermore, the method includes performing, by the one or more processors for each avatar of the plurality of avatars, mapping of the objective associated with the corresponding avatar with the set of tools.

In an embodiment, the scenario includes location of the corresponding avatar in the industrial metaverse. Further, the one or more information includes location information of the corresponding avatar in the industrial metaverse.

In an embodiment, the method further includes dynamically updating, by the one or more processors, the scenario in real-time based on sensor data of one or more sensors associated with the corresponding avatar.

In an embodiment, performing the cognitive profiling indicates analysing of cognitive abilities, traits, and behaviour of each user.

In an embodiment, the user profile information associated with each user includes at least one of cognitive ability information of each user, demographic information of each user, behaviour information of each user, and contextual information of each user.

In an embodiment, the cognitive ability information of each user includes information associated with at least one of a memory capability, a retention ability, an information processing capability, language proficiency, a problem-solving capability, or a reasoning capability of the corresponding user.

In an embodiment, the demographic information of each user includes information associated with at least one of age, gender, education level, socio-economic status, or ethnicity of the corresponding user.

In an embodiment, the behaviour information of each user includes information associated with at least one of likes and dislikes, expectations, emotional factors, or personality traits of the corresponding user.

In an embodiment, the contextual information of each user includes information associated with at least one of work specialization, education and training, strength, weakness, social support, and medical condition of the corresponding user.

In an embodiment, the set of tools includes at least one of customization and personalization tools, inventory tools, resource information tool, navigation tools, and communication tools.

The object of the present invention is also achieved by a system to intelligently equip and personalize tools for a plurality of avatars in an industrial metaverse. The system includes a memory and one or more processors communicatively coupled to the memory. The memory includes programmable instructions executable by the one or more processors. The programmable instructions, when executed by the one or more processors, cause the one or more processors to perform one or more methods, as discussed throughout the present invention.

The object of the present invention is also achieved by a cloud server to intelligently equip and personalize tools for a plurality of avatars in an industrial metaverse. The cloud server includes a memory and one or more processors communicatively coupled to the memory. The memory includes programmable instructions executable by the one or more processors. The programmable instructions, when executed by the one or more processors, cause the one or more processors to perform one or more methods, as discussed throughout the present invention.

The object of the present invention is also achieved by a computer-program product being disclosed. The computer-program product has machine-readable instructions stored therein, that when executed by one or more processors, cause the one or more processors to perform one or more methods, as discussed throughout the present invention.

The object of the present invention is also achieved by a non-transitory computer-readable medium being disclosed. The non-transitory computer-readable medium is encoded with executable instructions, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:
FIG. 1 is an overview of an environment comprising a system to intelligently equip and personalize tools for a plurality of avatars in an industrial metaverse, according to an embodiment of the present invention;
FIG. 2 is a block diagram of the system for intelligently equip and personalize tools for the plurality of avatars in the industrial metaverse, according to an embodiment of the present invention;
FIG. 3 illustrates a functional block diagram of the system to intelligently equip and personalize tools for the plurality of avatars in the industrial metaverse, according to an embodiment of the present invention; and
FIG. 4 illustrates an exemplary process flow depicting a method to intelligently equip and personalize tools for the plurality of avatars in the industrial metaverse, according to an embodiment of the present invention.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Throughout the present disclosure, the term "industrial metaverse" as used herein refers to a multiuser virtual world environment that mirrors and simulates real machines, factories, and other highly complex systems. The industrial metaverse is a fully immersive, real-time simulation of the real world.

The term "avatar" as used herein refers to a graphical representation of a user within the multiuser virtual world environment. The term "scenario" as used herein refers to a specific situation, condition, or use case that is simulated within the multiuser virtual world environment. The term "tools" as used herein refers to a variety of digital and virtual resources provided to the avatar to enable the avatar to perform a task or an objective in the multiuser virtual world environment.

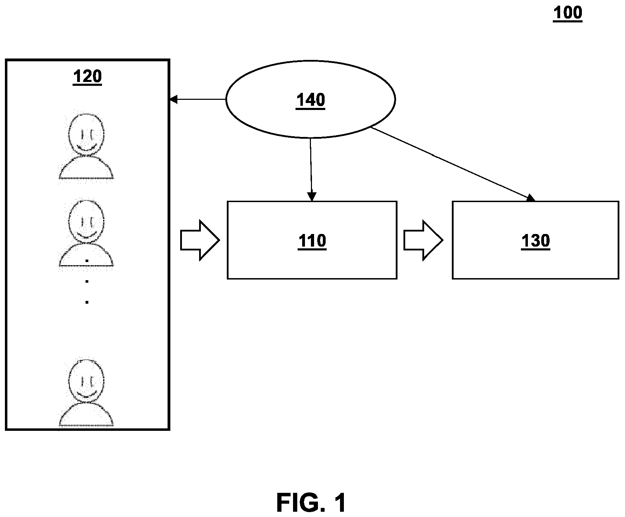

FIG. 1 is an overview of an environment 100 comprising a system 140 for intelligently equip and personalize tools for a plurality of avatars in an industrial metaverse, according to an embodiment of the present invention.

As shown in FIG. 1, the environment 100 comprises an application 110 to intelligently equip and personalize tools for the plurality of avatars. The application 110 is a virtual world application stored in a memory of the system 140. The virtual world application may be a client application or a server application.

The application 110 receives an input from an input unit 120 when a plurality of users enters into a virtual world as an avatar. The input includes information of each user entering into the virtual world and scenario associated with each user. The application 110 generates information of a recommended set of tools for the plurality of avatars associated with the plurality of users. The application 110 then equips the plurality of avatars with the plurality of tools based on the information of the recommended set of tools. Then, the application 110 outputs the plurality of avatars equipped with the plurality of tools to an output unit 130. The system 140 is configured to manage the functionality of the application 110, the input unit 120, and the output unit 130.

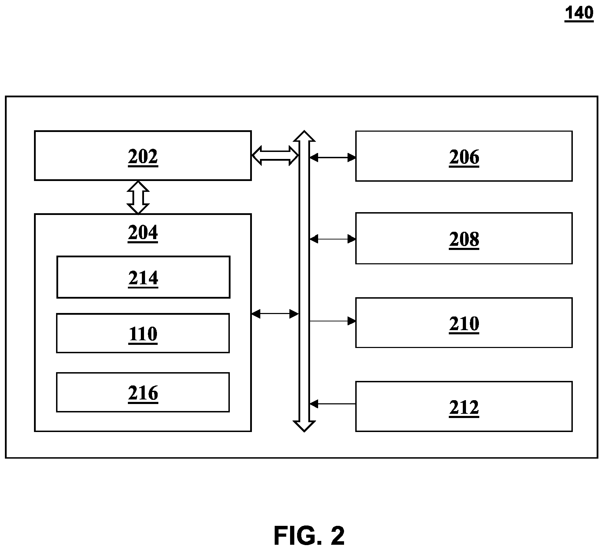

FIG. 2 is a block diagram of the system 140 to intelligently equip and personalize tools for the plurality of avatars in the industrial metaverse, according to an embodiment of the present invention.

In an embodiment, the system 140 may be a cloud-based system, such as a cloud server. In such an embodiment, the functionality of the system 140 is provided by the cloud server, and the details provided with respect to the system 140 would be applicable for the cloud server.

In another embodiment, the system 140 may be hosted on one or more user devices associated with an organization, a company, an industry, or one or more individuals. In an exemplary embodiment, the one or more user devices include electronic devices such as a laptop computer, a desktop computer, a smartphone, and the like.

In an embodiment, the system 140 is provided in a distributed manner, in that, one or more components and/or functionalities of the system 140 are provided through an electronic device, and one or more components and/or functionalities of the system 140 are to be provided through a cloud-based unit.

The system 140 includes a processor 202, a memory 204, a communication unit 206, an Input/Output (I/O) interface 208, a display unit 210, and a sensor unit 212.

The processor(s) 202 can be a single processing unit or several units, all of which could include multiple computing units. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions and data stored in the memory 204.

The memory 204 includes one or more computer-readable storage media. The memory 204 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory may, in some examples, be considered a non-transitory storage medium. The term "non-transitory" may indicate that the storage medium is not embodied in a carrier wave or a propagated signal. However, the term "non-transitory" should not be interpreted to mean that the memory is non-movable. In certain examples, a non-transitory storage medium may store data that can, over time, change (e.g., in Random Access Memory (RAM) or cache.

The memory 204 may further include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

The memory 204 includes a database 214, the application 110, and a Machine Learning (ML) model 216.

The database 214 is configured to be accessed by the processor 202 and stores information as required by the processor 202 to perform the one or more functions. The database may store user profile information of the plurality of the users.

If the system 140 is the cloud-based system, the application 110 is the server application. Further, if the system 140 is hosted on one or more user devices, the application 110 is the client application.

The ML model 216 may be implemented with an AI module that may include a plurality of neural network layers. Examples of neural networks include but are not limited to, convolutional neural network (CNN), deep neural network (DNN), recurrent neural network (RNN), and Restricted Boltzmann Machine (RBM). The learning technique for training the ML model 216 uses a plurality of learning data to cause, allow, or control the system 140 to make a determination or prediction. Examples of learning techniques include but are not limited to supervised learning, unsupervised learning, semi-supervised learning, or reinforcement learning. At least one of a plurality of CNN, DNN, RNN, RMB models and the like may be implemented to thereby achieve execution of the present subject matter's mechanism through the ML model 216. A function associated with the ML model 216 may be performed through the non-volatile memory, the volatile memory, and the processor 202.

The communication unit 206 is configured to communicate voice, video, audio, images, sensor data, or any other content over a communication network. Further, the communication unit 206 may include a communication port or a communication interface for sending and receiving signals from the system 140 via the communication network. The communication port or the communication interface may be a part of the processor 202 or may be a separate component. The communication port may be created in software or may be a physical connection in hardware. The communication port may be configured to connect with the communication network, external media, the display, or any other components in the system 140, or combinations thereof. The connection with the communication network may be a physical connection, such as a wired Ethernet connection, or may be established wirelessly as discussed above. Likewise, the additional connections with other components of the system 140 may be physical or may be established wirelessly. The communication unit 206 may include the Wi-Fi module or Bluetooth module for enabling wireless communication capability and data exchange capability between the system 140 and the network.

The I/O interface 208 refers to hardware or software components that enable communication between the system 140 and other devices or systems. The I/O interface 208 serves as a communication medium for exchanging information, commands, signals, or query responses with other devices or systems. The I/O interface 208 may be a part of the processor 202 or maybe a separate component. The I/O interface 208 may be created in software or maybe a physical connection in hardware. The I/O interface 208 may be configured to connect with an external network, external media, the display, or any other components, or combinations thereof. The external network may be a physical connection, such as a wired Ethernet connection, or may be established wirelessly.

The display unit 210 is configured to display a virtual environment to the user. The display unit 210 may be an Augmented Reality/Virtual Reality (AR/VR) device to display a virtual environment to the user. The display unit 210 may include a display screen. As a non-limiting example, the display screen may be Light Emitting Diode (LED), Liquid Crystal Display (LCD), Organic Light Emitting Diode (OLED), Active Matrix Organic Light Emitting Diode (AMOLED), or Super Active Matrix Organic Light Emitting Diode (AMOLED) screen. The display screen may be of varied resolutions.

The sensor unit 212 includes the one or more sensors configured to capture data associated with the plurality of the users. The one or more sensors may include a position sensor to capture location data of the users. The position sensor includes a GPS module. In some embodiments, the location data may include geographical data derived based on the network address, such as by using a predefined geolocation technique to approximate a location of the user in the physical world. At least in some embodiments, the application 110 is configured to derive the geographical data based on the network address and via the predefined geolocation technique.

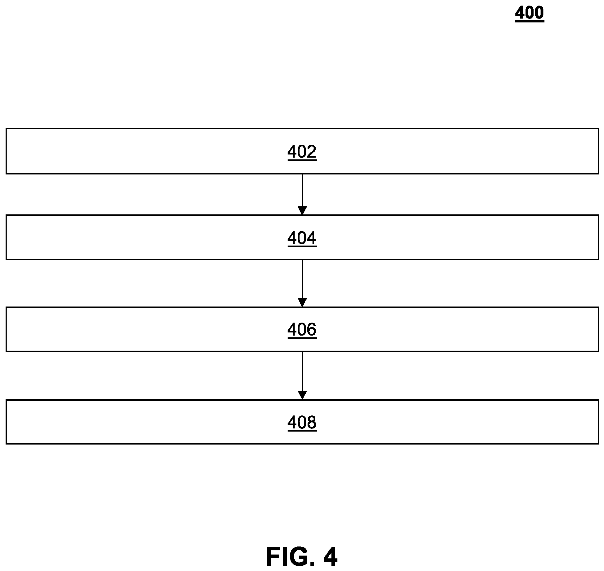

In an embodiment, the present invention also contemplates a computer-program product, having machine-readable instructions stored therein, when executed by the processor 202, cause the processor 202 to perform a method to intelligently equip and personalize tools for the plurality of avatars in the industrial metaverse. The details on the method(s) performed by the processor 202 have been elaborated in subsequent paragraphs at least with reference to FIG. 4.

Further, the present invention also contemplates a non-transitory computer-readable medium encoded with executable instructions. The executable instructions, when executed by the processor 202, cause the processor 202 to perform a method to intelligently equip and personalize tools for the plurality of avatars in the industrial metaverse. The details on the method(s) performed by the processor 202 have been elaborated in subsequent paragraphs at least with reference to FIG. 4.

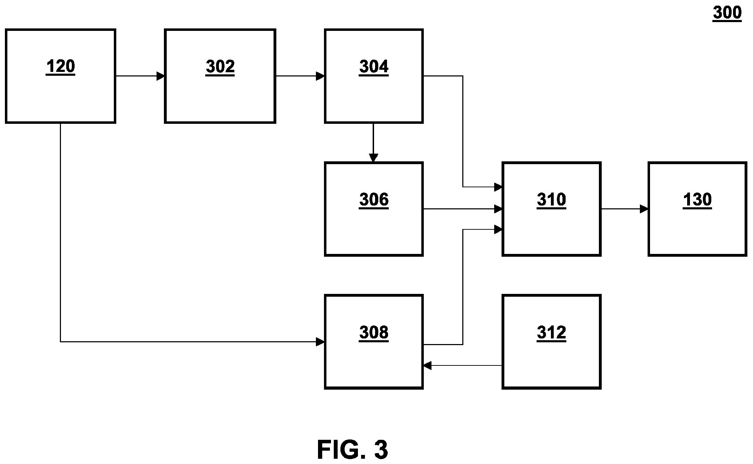

FIG. 3 illustrates a functional block diagram 300 of the system 140 for intelligently equip and personalize tools for the plurality of avatars in the industrial metaverse, according to an embodiment of the present invention. The functional block diagram 300 of the system 140 includes one or more functional units (or one or more modules). The one or more functional units are realized by the application 110 stored in the memory 204. These processor 202 controls the function of the one or more functional units via the application 110.

The one or more functional units includes the input unit 120, an avatar generation unit 302, a scenario understanding unit 304, a cognitive profiling unit 306, an objective mapping unit 308, an integrated toolset recommendation engine 310, and the output unit 130.

The input unit 120 identifies a user from the plurality of users whenever the user enters into the industrial metaverse which is a multiuser virtual environment. The input unit 120 sends information indicating that the user enters into the industrial metaverse to the avatar generation unit 302. The input unit 120 further identifies information associated with the user that enters into the industrial metaverse. The information associated with the user includes location information of the user in the industrial metaverse.

The avatar generation unit 302 receives the information indicating that the user enters into the industrial metaverse. The avatar generation unit 302 generates the avatar of the user when the avatar enters into the industrial metaverse. The avatar generation unit 302 generates the plurality of avatars for the plurality of the users.

The scenario understanding unit 304 identifies, for each avatar, a scenario in which the corresponding avatar has entered into the industrial metaverse. The scenario includes location of the corresponding avatar in the industrial metaverse. The location of the corresponding avatar is identified using the location information of the user in the industrial metaverse.

The scenario is identified for assessing a situation associated with the avatar. Assessing the situation helps to predict a set of tools the user would require. For example, the avatar is entering on a factory floor as a maintenance person. If the avatar is near the CNC machine, the avatar has to be equipped with all possible CNC tools, but if the avatar is on a workbench the avatar has to be equipped with all possible hand tools.

In an embodiment, the multiuser virtual environment includes the plurality of the users. Each user enters in the virtual environment to perform a task and each user may have a different scenario. For example, an HR person would have a different scenario, the factory maintenance person would have a different scenario. Therefore, every single situation on the factory floor may have a different scenario.

In an embodiment, the scenario may be updated dynamically in a real-time based on the sensor data of the one or more sensors associated with the corresponding avatar.

The cognitive profiling unit 306 performs cognitive profiling of each user of the plurality of users. The cognitive profiling may be performed based on the user profile information associated with each user stored in the database 214. The performing of the cognitive profiling indicates the analysis of cognitive abilities, traits, and behaviour of each user.

The user profile information may include cognitive ability information of each user, demographic information of each user, behaviour information of each user, and contextual information of each user.

The cognitive ability information of each user includes information associated with at least one of a memory capability, a retention ability, an information processing capability, language proficiency, a problem-solving capability, or reasoning capabilities of the corresponding user.

The demographic information of each user includes information associated with at least one of age, gender, education level, socio-economic status, or ethnicity of the corresponding user.

The behaviour information of each user includes information associated with at least one of likes and dislikes, expectations, emotional factors, or personality traits of the corresponding user. The information associated with emotional factors may include anxiety and depression factor information of the user. For example, the behaviour information may indicate that the user is afraid of dark, therefore in that situation, the user needs to be equipped with the required tools such that the user remains emotionally stable while performing tasks in the virtual environment.

The contextual information of each user includes information associated with at least one of work specialization, education and training, strength, weakness, social support, and medical condition of the corresponding user.

The objective mapping unit 308 identifies an objective required to be performed by each avatar of the plurality of avatars. The objective is identified when the user enters into the industrial metaverse. The objective mapping unit 308 further performs, for each avatar, mapping of the objective with a set of tools selected from an integrated set of tools 312. For instance, the objective mapping unit 308 maps the avatar with a set of tools. The set of tools is selected from the integrated set of tools 312 based on the identified objective to be performed by the corresponding avatar. For example, if the maintenance person enters into the virtual world to do regular periodic maintenance, the objective mapping unit 308 maps the avatar of the maintenance person with a first set of tools. However, if the maintenance person enters into the virtual world in emergencies, the objective mapping unit 308 maps the avatar of the maintenance person with a second set of tools different from the first set of tools.

The integrated set of tools 312 may include a plurality of types of tools. The plurality of types of tools may include customization and personalization tools, inventory tools, resource information tools, navigation tools, and communication tools.

The customization and personalization tools may include customized appearance, accessories, and clothing. For instance, the appearance may be customized by selecting hairstyle and/or skin tone. The customized accessories may include glasses and/or a hat. The appearance may be customized by selecting dress style and/or dress colour. For example, the user may be customized based on dress policy. In another example, a lab technician may be customized with a lab coat.

The inventory tools may comprise tools for productivity. The inventory tools may comprise virtual hand tools, virtual power tools, electronic gadgets, and VW building tools. For instance, the virtual hand tool may include a hammer and/or a screwdriver. The virtual power tool may include a drilling machine and/or a power saw. The electronic gadgets may include a charger and/or a power bank. The VW building tools may include extended space tools and/or construction building tools.

The resource information tool may include resources to access data. The resources to access the data may comprise past data such as digital thread, present data such as sensor data, future data such as prediction output, and documents. The documents may include manuals, reports, blueprints, and/or drawings.

The navigation tools may comprise maps, GPS, compass, navigation aids, teleportation equipment, and/or way-finding system.

The communication tools include resources to converse with others. The communication tools comprise a radio, a walkie-talkie, a messaging tool, a calling device, feedback devices, and/or soft tools such as tools to help as a conversation starter.

The integrated toolset recommendation engine 310 may determine a recommended set of tools for each avatar of the plurality of avatars using the ML model 216. The recommended set of tools is determined based on the identified scenario for the corresponding avatar, the cognitive profiling of the corresponding user associated with the corresponding avatar, and the mapping of the objective associated with the corresponding avatar with the set of tools. Further, the integrated toolset recommendation engine 310 may equip each avatar of the plurality of avatars with the recommended set of tools. Also, the integrated toolset recommendation engine 310 may output information of the plurality of avatars equipped with the plurality of tools to the output unit 130.
the output unit 130 displays the avatar of the user equipped with the plurality of tools to the corresponding user via the display unit 210.

FIG. 4 illustrates an exemplary process flow depicting a method 400 for intelligently equip and personalize tools for the plurality of avatars in the industrial metaverse, according to an embodiment of the present invention. The method 400 includes a series of operation steps 402 through 408 performed by the processor 202 of the system 140.

At step 402, the processor 202 generates the plurality of avatars based on the plurality of users entering into the industrial metaverse. The flow of the method 400 now proceeds to step 404.

At step 404, the processor 202 identifies, for each avatar of a plurality of avatars, the scenario in which the corresponding avatar has entered into the industrial metaverse. The scenario is identified based on the one or more information associated with the corresponding avatar. The flow of the method 400 now proceeds to step 406.

At step 406, the processor 202 performs cognitive profiling of each user of the plurality of users based on the user profile information associated with each user. The flow of the method 400 now proceeds to step 408.

At step 408, the processor 202 equips, each avatar of the plurality of avatars with the recommended set of tools from the set of tools based on the identified scenario for the corresponding avatar, the cognitive profiling of the corresponding user associated with the corresponding avatar, and the mapping of the objective associated with the corresponding avatar with the set of tools.

In a use case scenario, consider a welding technician qualified to do arc welding, co2 welding enters an oil rig scenario in the industrial metaverse. Further, in the industrial metaverse along with the welding persona, there are other maintenance personas like plumbers and electricians. Therefore, each of them requires a different set of tools than the welding persona, but all of them enter the same virtual world to go through meeting their objective.

In the above use case, the scenario is pipe welding (Co2 welding), and the skill level of the welder is entry-level. The avatar of the user is equipped with the tools to context like a Co2 welding kit and an interactive step-by-step visual reference guide along with a support system of an expert trainer on call in case of any eventualities. This equipping of the maintenance persona to context increases his confidence in doing his work and increases productivity.

The present invention provides various technical advancements based on the key features discussed above. The disclosed method proposes a solution to make the avatar more productive by equipping the avatar with a set of tools such that to increase the productivity of the avatar. The disclosed method dynamically provides the necessary tools and resources leading to a scalable model of avatar tool personalization. Further, the disclosed method equips the avatars with the right set of tools at the right time to avoid delays in work and increase productivity. Furthermore, equipping the avatars with the recommended set of tools based on three factors including scenario understanding, the cognitive profiling, and the objective makes the avatars more productive.

The various actions, acts, blocks, steps, or the like in the flow diagrams may be performed in the order presented, in a different order, or simultaneously. Further, in some embodiments, some of the actions, acts, blocks, steps, or the like may be omitted, added, modified, skipped, or the like without departing from the scope of the invention.

Unless otherwise defined, all technical and scientific terms used herein have the same meaning as commonly understood by one ordinary skilled in the art to which this invention belongs. The system, methods, and examples provided herein are illustrative only and not intended to be limiting.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practised with modification within the scope of the embodiments as described herein.

**List of Reference Numerals**

| | |
|---|---|
| Environment | 100 |
| Application | 110 |
| input unit | 120 |
| Output unit | 130 |
| System | 140 |
| processor | 202 |
| Memory | 204 |
| communication unit | 206 |
| Input/Output (I/O) interface | 208 |
| display unit | 210 |
| sensor unit | 212 |
| database | 214 |
| Machine Learning (ML) model | 216 |
| functional block diagram | 300 |
| avatar generation unit | 302 |
| scenario understanding unit | 304 |
| cognitive profiling unit | 306 |
| objective mapping unit | 308 |
| integrated toolset recommendation engine | 310 |
| Method | 400 |
| Method steps | 402, 404, 406, 408 |

## Claims

1. A computer-implemented method (400) to intelligently equip and personalize tools for a plurality of avatars in an industrial metaverse, the method (400) comprising:
identifying (404), by one or more processors (202), for each avatar of a plurality of avatars, a scenario in which a corresponding avatar has entered into the industrial metaverse, wherein
the scenario is identified based on one or more information associated with the corresponding avatar, and
the plurality of avatars corresponds to a plurality of users in the industrial metaverse;
performing (406), by the one or more processors (202), cognitive profiling of each user of the plurality of users based on user profile information associated with each user; and
equipping (408), by the one or more processors (202), each avatar of the plurality of avatars with a recommended set of tools from a set of tools based on the identified scenario for the corresponding avatar, the cognitive profiling of a corresponding user associated with the corresponding avatar, and a mapping of an objective associated with the corresponding avatar with the set of tools.

2. The computer-implemented method (400) according to claim 1, further comprising:
generating, by the one or more processors (202), the plurality of avatars based on the plurality of users entering into the industrial metaverse;
identifying, by the one or more processors (202), an objective required to be performed by each avatar of the plurality of avatars; and
performing, by the one or more processors (202) for each avatar of the plurality of avatars, mapping of the objective associated with the corresponding avatar with the set of tools.

3. The computer-implemented method (400) according to claim 1, wherein
the scenario includes location of the corresponding avatar in the industrial metaverse; and
the one or more information includes location information of the corresponding avatar in the industrial metaverse.

4. The computer-implemented method (400) according to claim 1, further comprising dynamically updating, by the one or more processors (202), the scenario in real-time based on sensor data of one or more sensors associated with the corresponding avatar.

5. The computer-implemented method (400) according to claim 1, wherein performing the cognitive profiling indicates analysing of cognitive abilities, traits, and behaviour of each user.

6. The computer-implemented method (400) according to claim 1, wherein the user profile information associated with each user includes at least one of:
cognitive ability information of each user;
demographic information of each user;
behaviour information of each user; and
contextual information of each user.

7. The computer-implemented method (400) according to claim 6, wherein the cognitive ability information of each user includes information associated with at least one of a memory capability, a retention ability, an information processing capability, language proficiency, a problem-solving capability, or a reasoning capability of the corresponding user.

8. The computer-implemented method (400) according to claim 6, wherein the demographic information of each user includes information associated with at least one of age, gender, education level, socio-economic status, or ethnicity of the corresponding user.

9. The computer-implemented method (400) according to claim 6, wherein the behaviour information of each user includes information associated with at least one of likes and dislikes, expectations, emotional factors, or personality traits of the corresponding user.

10. The computer-implemented method (400) according to claim 6, wherein the contextual information of each user includes information associated with at least one of work specialization, education and training, strength, weakness, social support, and medical condition of the corresponding user.

11. The computer-implemented method (400) according to claim 1, wherein the set of tools includes at least one of:
customization and personalization tools;
inventory tools;
resource information tool;
navigation tools; and
communication tools.

12. A system (140) to intelligently equip and personalize tools for a plurality of avatars in an industrial metaverse, the system (140) comprising:
a memory (204); and
one or more processors (202) communicatively coupled to the memory (204), wherein the memory (204) comprises programmable instructions which, when executed by the one or more processors (202), cause the one or more processors (202) to perform the method steps of claims 1 to 11.

13. A cloud server to intelligently equip and personalize tools for a plurality of avatars in an industrial metaverse, the cloud server comprising:
a memory (204); and
one or more processors (202) communicatively coupled to the memory (204), wherein the memory (204) comprises programmable instructions which, when executed by the one or more processors (202), cause the one or more processors (202) to perform the method steps of claims 1 to 11.

14. A computer-program product, having machine-readable instructions stored therein, which when executed by one or more processors (202), cause the one or more processors (202) to perform a method according to any of the claims 1 to 11.

15. A non-transitory computer readable medium encoded with executable instructions which, when executed by one or more processors (202), cause the one or more processors (202) to perform a method according to any one of the claims 1 to 11.
